Europäisches Patentamt

European Patent Office

Office européen des brevets

(19)

(11) **EP 1 267 534 A1**

(12) **EUROPEAN PATENT APPLICATION**
published in accordance with Art. 158(3) EPC

(43) Date of publication:
**18.12.2002 Bulletin 2002/51**

(51) Int Cl.$^7$: **H04L 27/20**, H04L 27/22,
H04J 13/00

(21) Application number: **01902838.0**

(22) Date of filing: **09.02.2001**

(86) International application number:
**PCT/JP01/00955**

(87) International publication number:
**WO 02/065722 (22.08.2002 Gazette 2002/34)**

(84) Designated Contracting States:
**AT BE CH CY DE DK ES FI FR GB GR IE IT LI LU MC NL PT SE TR**

(71) Applicant: **MITSUBISHI DENKI KABUSHIKI KAISHA**
**Tokyo 100-8310 (JP)**

(72) Inventor: **HIRAKI, Hirochika,**
**MITSUBISHI DENKI KK**
**Chiyoda-ku, Tokyo 100-8310 (JP)**

(74) Representative:
**Bohnenberger, Johannes, Dr. et al**
**Meissner, Bolte & Partner**
**Widenmayerstrasse 48**
**80538 München (DE)**

(54) **DIGITAL MODULATION SYSTEM, RADIO COMMUNICATION SYSTEM, RADIO COMMUNICATION DEVICE**

(57)    In the digital modulation method in radio communication, if a digital signal to be transmitted requires transmission OFF on a bit basis, the demodulation performance deterioration in demodulation can be reduced by inserting dummy data in accordance with the timing of transmission OFF.

## FIG.5

**Description**

Technical Field

This invention is related to a digital modulation method, in which dummy data is inserted into digital data to be transmitted so that digital data transmitted from the transmitting side can be accurately demodulated at the receiving side, and a radio communication method and a radio communication apparatus to which the digital modulation method is applied.

Background Art

In the conventional digital modulation method in radio communication, the modulation method in which the phase of the carrier is discretely changed according to digital data to be transmitted (hereinafter referred to as transmission data) is called a PSK (Phase Shift Keying) method, and its most simplest form is a BPSK (Binary Phase Shift Keying) modulation method. The BPSK modulation method is a binary transmission method in which the phase of a carrier cos ωt is changed to 0 and π in response to transmission data 0 and 1. The BPSK modulation wave S(t) is represented by the following equation.

$$S(t)=A \cos (\omega t+\theta(t))$$

S(t): BPSK modulation wave
A : Amplitude
ω : Carrier central angular frequency
θ (t): Modulation phase component

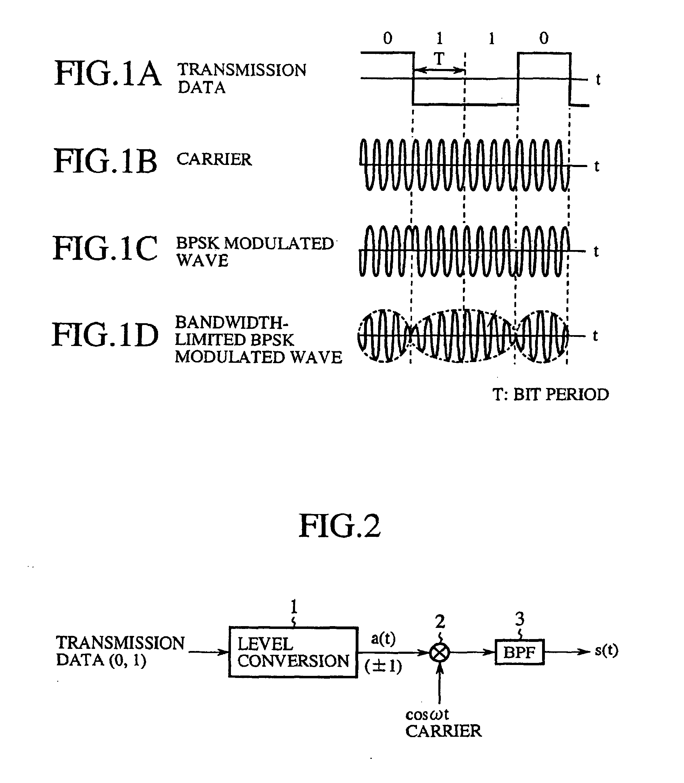

Further, the relations between the transmission data, carrier, BPSK modulated wave, and bandwidth-limited BPSK modulated wave are shown in Fig.s 1A to 1D.
The BPSK modulated wave S(t) is generated by the following method. In Fig. 2, first, level conversion is applied to transmission data a(t) 0 (if transmission data is 0) and 1(if transmission data is 1) in a level conversion unit 1 so that the levels become +1 and-1. And, by multiplying the transmission data a(t), converted in level, by the carrier cos ωt in a multiplier 2, and making it pass through a BPF (Band Pass Filter) 3, a BPSK signal S(t) is obtained. This process is shown by the following equation. In this equation, it is found that, by multiplying the level-converted transmission data a(t) and the carrier cos ωt, the phase modulation of 0 andπ is made.

$$S(t)=\begin{cases}\cos\omega t = \cos(\omega t + 0) : a(t) = +1 \\ -\cos\omega t = \cos(\omega t + \pi) : a(t) = -1\end{cases}$$

On the other hand, the QPSK modulation method is a four-value transmission PSK method, in which information is transmitted at a rate of two bits for each one symbol time by taking four kinds of phases. In the QPSK modulation method, for 2-bit transmission data (0, 0), (1, 0), (1, 1) and (0, 1), the phase of the carrier cos ωt is changed to π/4 (for transmission data (0, 0)), 3 π/4 (transmission data (1, 0)), - 3π/4 (transmission data (1, 1)), and -π/4 (transmission data (0, 1)). The QPSK modulated wave S(t) is represented by the following equation.

$$S(t)=A \cos (\omega t+\theta(t))$$

S(t): QPSK modulated wave
A : Amplitude
ω : Carrier central angular frequency
θ (t): Modulation phase component

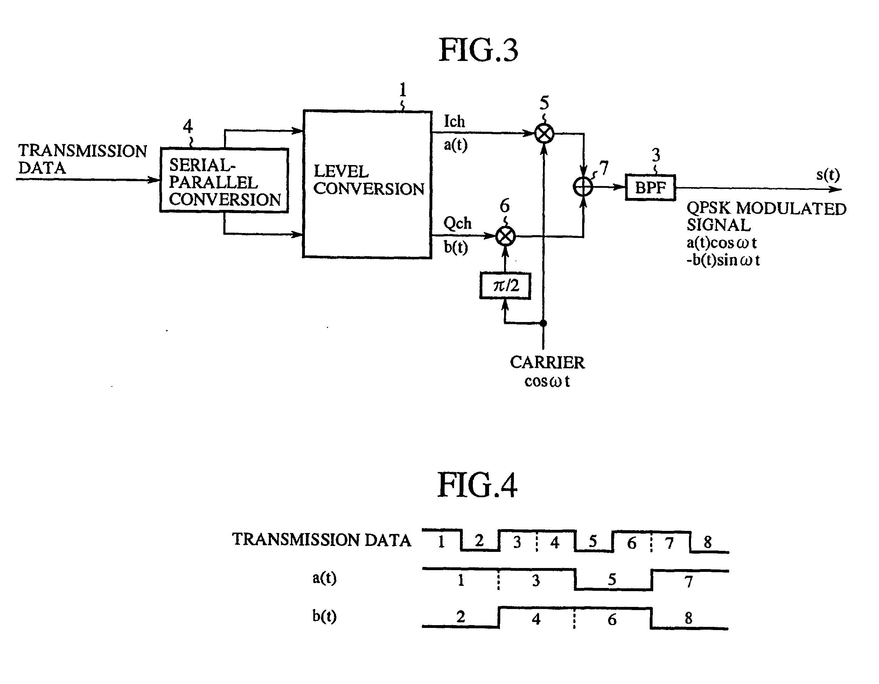

In Fig. 3, after performing a serial-parallel conversion of transmission data to two sequences a(t) and b(t), as shown in Fig. 4, in a serial-parallel converter 4, level conversion of data 0 and 1 is carried out so that they become +1 and -1, respectively, in the level converter 1, to prepare a(t) and b(t) signals.

One of the two sequence signals, a(t), is multiplied by the carrier c o s ωt in a multiplier 5, and the other one, b(t), is multiplied by a carrier sin ωt in a multiplier 6, and thereafter the two modulated carriers are added together in an adder 7, and made to pass through the BPF 3 to obtain a QPSK modulated wave S(t). In this way, the QPSK modulated wave S(t) is generated by adding the two BPSK modulated waves independently modulated by orthogonal carriers. This processing is shown by the following equation. This equation shows that four kinds of phases are taken.

The above QPSK modulated wave S(t) is expressed as follows.

$$S(t)=a(t) \cos \omega t - b(t) \sin \omega t$$

This equation is deformed as follows.

$$
\begin{cases}
S(t) = \sqrt{2}\cos(\omega t + \pi/4) = \sqrt{2}\,\mathrm{Re}\!\left[e^{j\pi/4}e^{j\omega t}\right]: (a,b) = (+1,+1) \\
S(t) = \sqrt{2}\cos(\omega t + 3\pi/4) = \sqrt{2}\,\mathrm{Re}\!\left[e^{j3\pi/4}e^{j\omega t}\right]: (a,b) = (-1,+1) \\
S(t) = \sqrt{2}\cos(\omega t - \pi/4) = \sqrt{2}\,\mathrm{Re}\!\left[e^{-j\pi/4}e^{j\omega t}\right]: (a,b) = (+1,-1) \\
S(t) = \sqrt{2}\cos(\omega t - 3\pi/4) = \sqrt{2}\,\mathrm{Re}\!\left[e^{-j3\pi/4}e^{j\omega t}\right]: (a,b) = (-1,-1)
\end{cases}
$$

$e^{j\omega t}$ in Re[ ] represents the oscillation of the modulated wave, and information is carried on $e^{j\pi/4}$, $e^{j3\pi/4}$, $e^{-j\pi/4}$, and $e^{-j3\pi/4}$. As obvious from this, four phases are taken.

Since the digital modulation method in radio communication is constructed as described above, when the transmission is turned OFF on a bit basis at the transmitting side, the phase mapping signals of Ich and Qch take a value of 0 representing transmission OFF. As a result, three values (1, 0, -1) are taken as phase mapping signals, and eight values are taken on an I/Q plane. Accordingly, if data assuming eight values is demodulated at the receiving side, the data is mapped on the decision boundary for reception decision when comparing and determining positive/negative of the phase mapping signals of Ich and Qch, so that there was a problem that demodulation would not be correctly performed, causing deterioration of the demodulation performance when demodulation is performed.

This invention was accomplished to solve the prior problem as described above, and it aims to provide a digital modulation method characterized in that, in the modulation method for use with a radio communication method, reduction of demodulation performance deterioration is enabled when the transmission is turned OFF on a bit basis for transmission data, and a radio communication method and a radio communication apparatus to which the digital modulation method is applied.

Disclosure of Invention

The digital modulation method of this invention is such that, if data to be transmitted needs transmission OFF on a bit basis, dummy data is inserted in accordance with the timing of transmission OFF.

With this, in demodulation at the receiving side, transmission data is reconstructed by using the position information of dummy data, so that there is an effect of reducing the demodulation performance deterioration.

In the digital modulation method related to this invention, if the phase mapping signal pair of Ich and Qch converted based on an I/Q plane predetermined in the QPSK modulation method requires transmission OFF on a bit basis, dummy data is inserted into all the transmission OFF portions in accordance with the timing of transmission OFF.

With this, the phase mapping signal pair of Ich and Qch previously taking eight values on the I/Q plane will take four values, and data is prevented from mapping on the decision boundary for reception decision when comparing and determining positive/negative of the phase mapping of Ich and Qch, thereby providing an effect of reducing the demodulation performance deterioration at the time of demodulation.

In the digital modulation method related to this invention, if the phase mapping signal pair of Ich and Qch converted based on an I/Q plane predetermined in the QPSK modulation method requires transmission OFF on a bit basis, and if the transmission OFF continues and only one of the pair of phase mapping signals is transmission OFF, dummy data is inserted into the transmission OFF portions in accordance with the timing of transmission OFF.

With this, the phase mapping signal pair of Ich and Qch previously taking eight values on the I/Q plane will take four values, and data is prevented from mapping on the decision boundary for reception decision when comparing and determining positive/negative of the phase mapping of Ich and Qch, thereby providing an effect of reducing the demodulation performance deterioration at the time of demodulation and suppressing the transmitting power.

In the radio communication method related to this invention, digital data is modulated by the digital modulation method in which dummy data is inserted in accordance with the timing of transmission OFF.

This provides an effect of reducing the demodulation performance deterioration in demodulation at the receiving side.

The radio communication apparatus related to this invention includes a digital modulator employing the digital modulation method, in which dummy data is inserted in accordance with the timing of transmission OFF of digital data to be transmitted.

This provides an effect of reducing the demodulation performance deterioration in demodulation at the receiving side.

The radio communication apparatus related to this invention comprises a dummy data generator for inserting dummy data in accordance with the timing of transmission OFF of digital data to be transmitted, a level converter for performing level conversion of the digital data to be transmitted having dummy data inserted thereinto, and a digital modulator having a multiplier for multiplying the output of the level converter by a carrier.

This provides an effect of reducing the demodulation performance deterioration in demodulation at the receiving side.

The radio communication apparatus related to this invention comprises a serial-parallel converter for converting digital data to be transmitted to two sequences, a dummy data generator for inserting dummy data in accordance with the timing of transmission OFF of the digital data converted to the two sequences, a level converter for performing the level conversion of the transmission digital data having dummy data inserted thereinto, and a digital modulator having a multiplier for multiplying the transmission digital data of the two sequences outputted from the level converter by carriers having phases different by 180 degrees.

This provides an effect of reducing the demodulation performance deterioration in demodulation at the receiving side.

This provides an effect of reducing the demodulation performance deterioration in demodulation at the receiving side. The digital modulation method related to this invention is characterized in that, in the digital modulation method in radio communication, when symbol data representing DTX (Discontinuous Transmission) is inserted into the down physical channel with the CDMD (Code Division Multiple Access) method, and if the phase mapping signals of Ich and Qch are symbol data representing DTX, dummy data is inserted into all the symbol data portions representing DTX.

This provides an effect of reducing the demodulation performance deterioration in demodulation at the receiving side.

In the radio communication method related to this invention, if the phase mapping signals of Ich and Qch are symbol data representing DTX, modulation and transmission are performed by the digital modulation method in which dummy data is inserted into all the symbol data portions representing DTX.

This provides an effect of reducing the demodulation performance deterioration in demodulation at the receiving side.

The radio communication apparatus related to this invention includes a digital modulator employing the digital modulation method in which, if the phase mapping signals of Ich and Qch are symbol data representing DTX, dummy data is inserted into all the symbol data portions representing DTX.

This provides an effect of reducing the demodulation performance deterioration in modulation at the receiving side.

The digital modulation method related to this invention is characterized in that, in the CDMA (Code Division Multiple Access) method, when symbol data representing DTX (Discontinuous Transmission) is inserted into the down physical channel, and if either one of the phase mapping symbols of Ich and Qch is symbol data representing DTX, dummy data is inserted into the symbol data portions representing DTX.

This provides an action of reducing the demodulation performance deterioration at the receiving side as well as suppression of the transmitting power, which can be accomplished without increasing interference.

The radio communication method related to this invention employs the digital modulation method in which, if either one of the phase mapping signals of Ich and Qch is symbol data representing DTX, dummy data is inserted into the symbol data portions representing DTX.

This enables reduction of the demodulation performance deterioration at the time of demodulation as well as suppression of the transmitting power, which can be accomplished without increasing interference.

The radio communication apparatus related to this invention includes a digital modulator employing the digital modulation method in which, if either one of the phase mapping signals of Ich and Qch is symbol data representing DTX, dummy data is inserted into the symbol data portions representing DTX.

This enables reduction of the demodulation performance deterioration at the time of demodulation as well as suppression of the transmitting power, which can be accomplished without increasing interference.

Brief Description of the Drawings

Figs. 1A to 1D are waveform diagrams showing the relations among the transmission data, carrier, BPSK modulated wave, and bandwidth-limited BPSK modulated wave;
Fig. 2 is a circuit diagram for generating the BPSK modulated wave;
Fig. 3 is a circuit diagram for generating the QPSK modulated wave;
Fig. 4 is a relational diagram for transmission data and the data after serial-parallel conversion;
Fig. 5 is a block diagram of the BPSK modulator according to a first embodiment;
Fig. 6 is an explanatory diagram of dummy data insertion;
Fig. 7 is a block diagram of the BPSK demodulator of this invention;
Fig. 8 is a relational diagram for transmission data and dummy position information;
Fig. 9 is a first explanatory diagram of dummy data insertion in the QPSK modulation;
Fig. 10 is a second explanatory diagram of dummy data insertion in the QPSK modulation;
Fig. 11 is a block diagram of the QPSK modulator of this invention;
Fig. 12 is a block diagram of the QPSK demodulator of this invention;
Fig. 13 is a signal space diagram of the QPSK modulated signal;
Fig. 14 is a mapping diagram for transmission OFF;
Fig. 15 is a transmission data diagram including DTX information;
Fig. 16 is a first explanatory diagram of dummy data insertion into transmission OFF positions; and
Fig. 17 is a second explanatory diagram of dummy data insertion into transmission OFF positions.

Best Mode for Carrying Out the Invention

Now, to describe this invention in detail, the best mode for carrying out this invention is described according to the accompanying drawings.

(First embodiment)

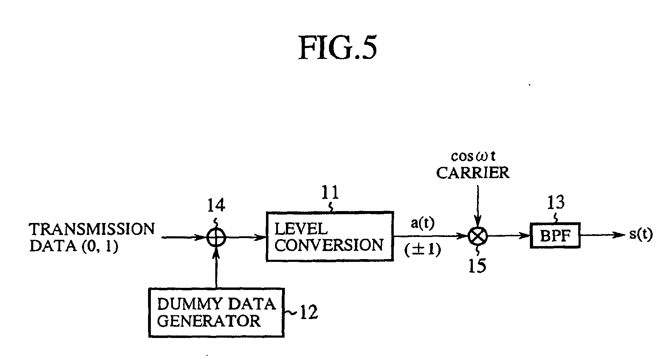

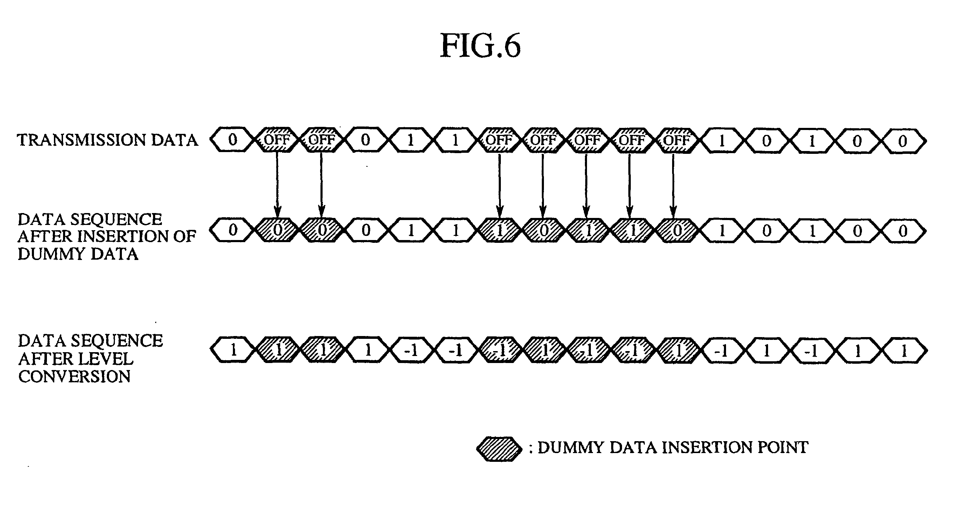

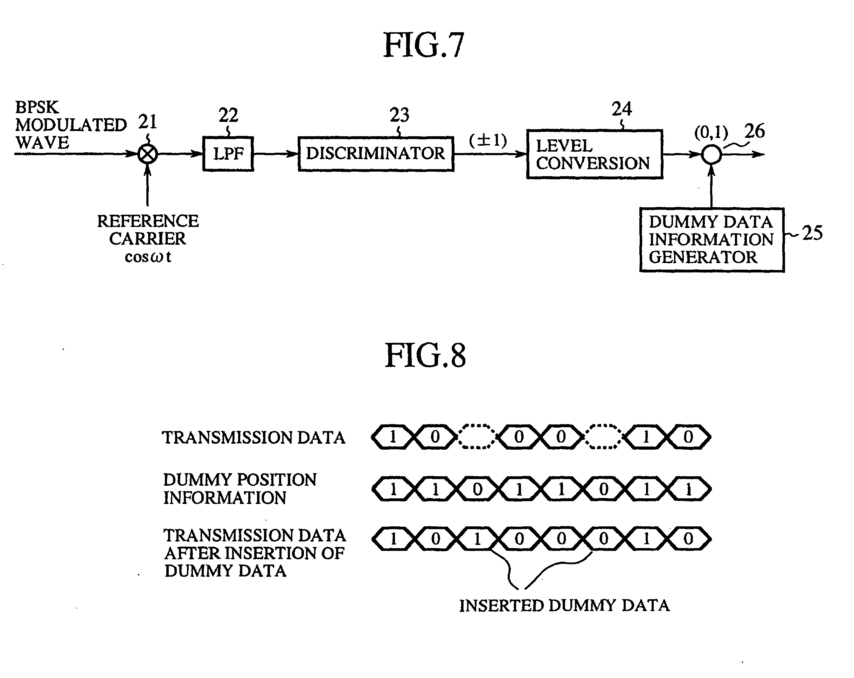

Fig. 5 is a block diagram of the BPSK modulator according to this invention, Fig. 6 is an explanatory diagram of dummy data insertion, and Fig. 7 is a block diagram of the BPSK demodulator. In the figure, 11 is a level converter, which converts transmission data (0, 1) to (+1, -1). 12 is a dummy data generator, 13 is a BPF, 14 is an adder for adding dummy data to transmission data in accordance with the timing of transmission OFF, and 15 is a multiplier for multiplying the level-converted transmission data by a carrier cos ωt, wherein a modulated wave S(t) is transmitted through the multiplier 15 and the BPF 13.
With reference to Fig. 6, the method for inserting dummy data is described. In accordance with the timing of transmission OFF contained in transmission data, dummy data generated from the dummy data generator 12 is inserted. Thereafter, the data sequence having dummy data inserted thereinto is submitted to level conversion in the level converter 11, and transmission is performed through a modulation process.
On the other hand, in the BPSK demodulator side as shown in Fig. 7, the transmitted BPSK modulated wave is multiplied by the reference carrier cos ωt in a multiplier 21, and thereafter is made to pass through an LPF (Low Pass Filter) 22 and inputted to a discriminator 23 for hard decision. The data outputted from the discriminator 23 experiences level conversion (0, 1) in a level converter 24, and thereafter, from the information sent from a data position information generator 25, the signal of which timing is a dummy data is determined in a signal determination unit 26, and if it is dummy data, then it is replaced by a signal representing transmission OFF for reconstruction. Due to this, dummy data inserted at the timing of transmission OFF can be deleted, so that the demodulation performance deterioration by transmission OFF at the time of demodulation can be reduced.
That is, in transmission data (a transmission bit sequence), there are time bands in which data is not transmitted with respect to time axis (dotted lines in Fig. 8). Thus, if that data is received at the receiving side, the demodulation performance will deteriorate. Accordingly, as dummy data position information, time bands in which data is actually transmitted are designated 1, while time bands in which no transmission is performed are designated 0. Further, since the demodulation performance deterioration can be reduced if there is data in time bands in which no transmission is performed, dummy data is inserted into the timing of no transmission for data transmission. Dummy data to be inserted is a value of 0 or 1.
As described above, in accordance with the first embodiment, if digital data to be transmitted needs transmission OFF on a bit basis, dummy data is inserted in accordance with the timing of transmission OFF, so that, in demodulation at the receiving side, the data at the time of transmission is reconstructed by using the dummy data position information, thereby to enable reduction of the demodulation performance deterioration.

(Second embodiment)

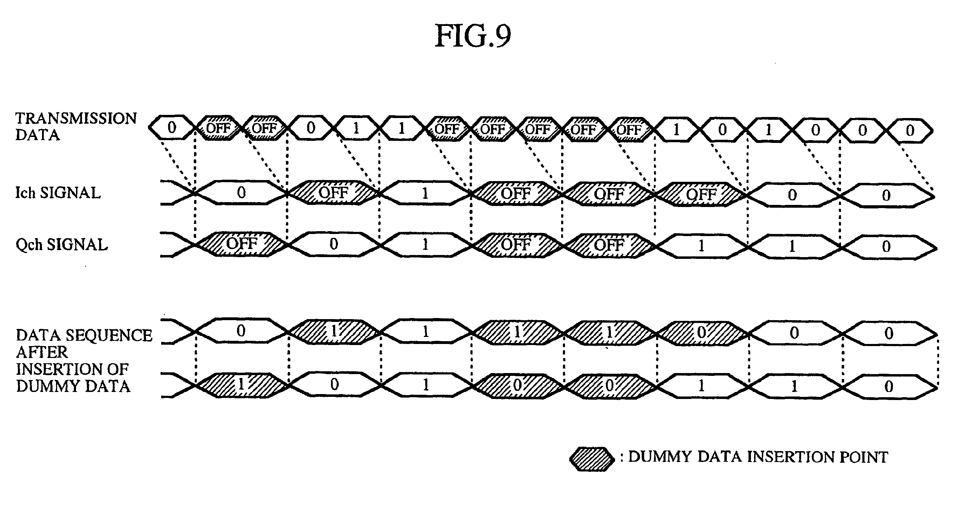

As shown in Fig. 9, a transmission data sequence having transmission OFF symbols is separated into phase mapping signals of Ich and Qch, and in accordance with all the transmission OFF timings included in data to be transmitted, dummy data generated from the dummy data generator is inserted for processing.

As described above, according to the second embodiment, the phase mapping signal pair of Ich and Qch previously taking eight values on the I/Q plane has four values, and data is prevented from mapping on the decision boundary for reception decision when comparing and determining positive/negative of the phase mapping of Ich and Qch, by which the demodulation performance deterioration at the time of demodulation can be reduced.

(Third embodiment)

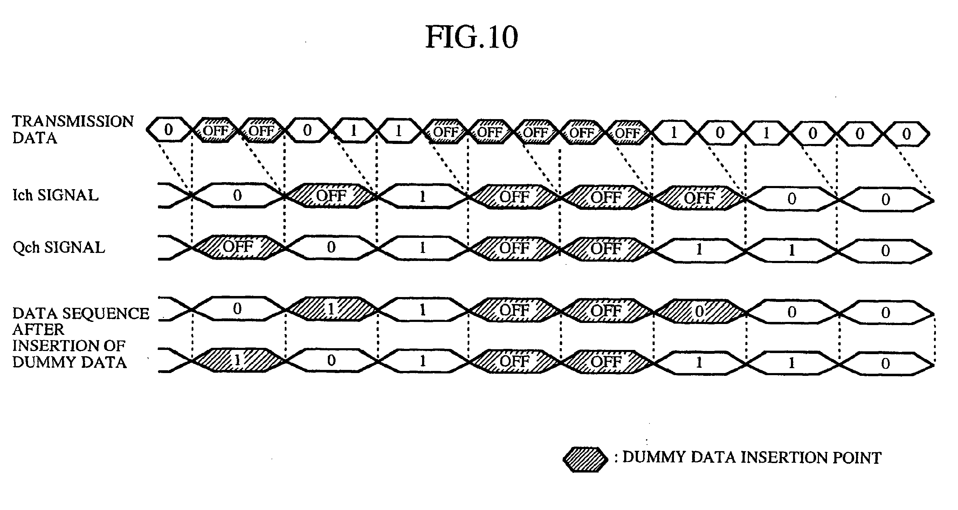

As shown in Fig. 10, a transmission data sequence having transmission OFF symbols is separated into phase mapping signals of Ich and Qch, and considering the pair of signals of Ich and Qch, if a transmission symbol is included in either one of them, dummy data is inserted in accordance with the timing of transmission OFF. With this, as compared with the case in which dummy data is inserted into all the transmission OFF symbols, transmission of redundant dummy data is not performed, so that the transmitting power can be suppressed.

As described above, according to the third embodiment, the phase mapping signal pair of Ich and Qch previously taking eight values on the I/Q plane has four values, and data is prevented from mapping on the decision boundary for reception decision when comparing and determining positive/negative of the phase mapping of Ich and Qch, thereby enabling reduction of the demodulation performance deterioration at the time of demodulation as well as suppression of the transmitting power.

(Fourth embodiment)

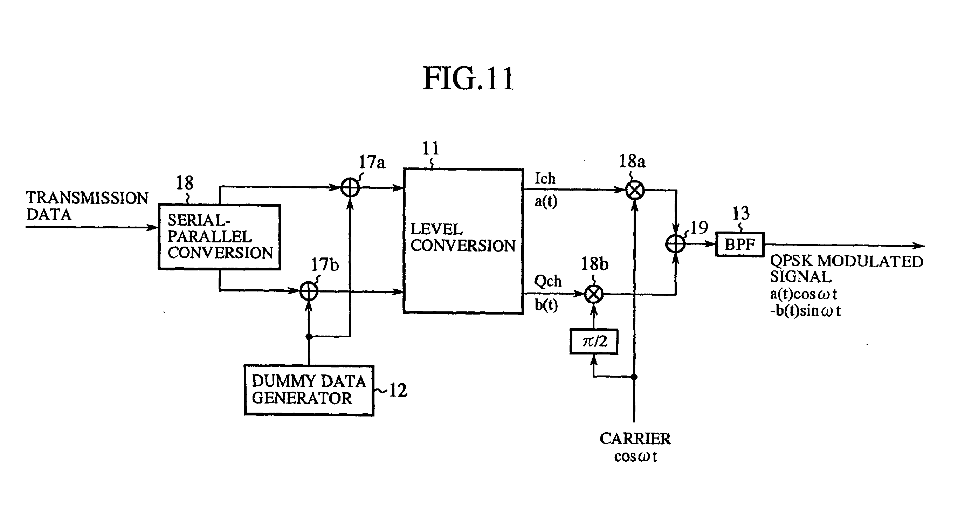

Fig. 11 shows a block diagram of the QPSK modulator in a fourth embodiment for carrying out this invention, in which transmission data is inputted to a serial-parallel converter 18, and outputted as two rows of parallel data sequences through parallel conversion. Thereafter, the two parallel data sequences are inputted to a level converter 11 after dummy data from a dummy data generator 12 is inserted into all the portions indicating transmission OFF in adders 17a and 17b in accordance with the timing of transmission OFF. Upon input of the two rows of parallel data sequences (0, 1), the level converter 11 performs a level conversion of data to (+1, -1), and outputs them. The outputted two rows of data sequences are multiplied by carriers cos ωt and sin ωt in multipliers 18a and 18b, respectively, and after added together in an adder 19, a QPSK modulated signal is transmitted through a BPF 13.

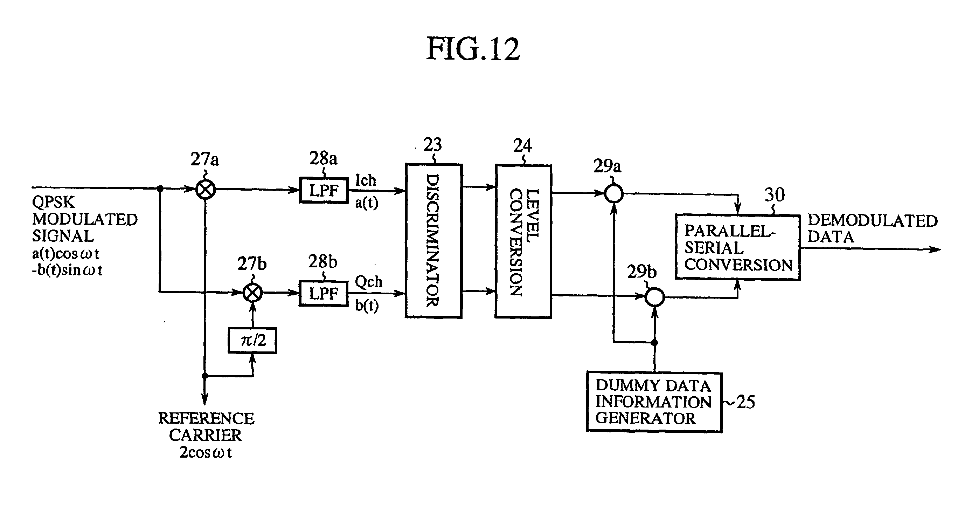

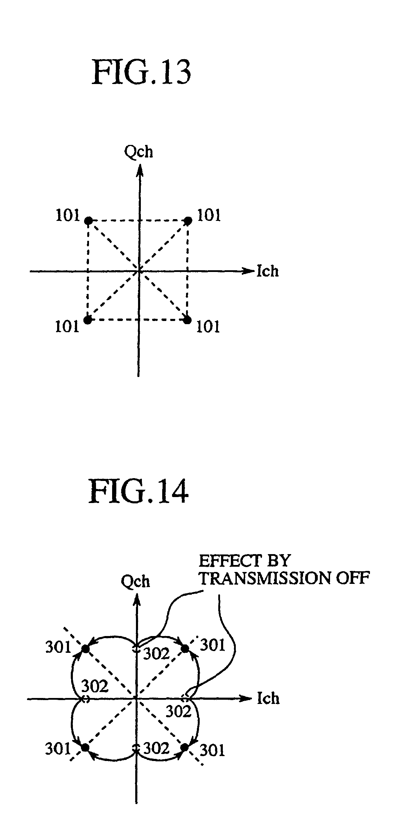

Fig. 12 shows a block diagram of the QPSK demodulator in this invention, in which the incoming QPSK modulated data is multiplied by a reference carrier 2cos ωt in a multiplier 27a and by a reference carrier 2sin ωt in a multiplier 27b, and thereafter made to pass through LPFs 28a and 28b, and inputted to a discriminator 23 for hard decision. The ± 1 data outputted from the discriminator 23 is converted for level in a level converter 24, and from the information sent from a dummy data position information generator 25, it is determined in signal determination units 29a and 29b at which timings the signal becomes dummy data, and the signal is replaced by data representing transmission OFF at the places determined to be dummy data, inputted to a parallel-serial converter 30, and outputted as demodulated data. This enables reduction of the performance deterioration at the time of demodulation. Fig. 13 shows a signal space diagram of the QPSK modulated signal.

However, as shown in Fig. 14, if either of the phase mapping signals of Ich and Qch of a digital signal to be transmitted is made transmission OFF, a symbol on the I/Q plane occupies one of the points 302. In this case, the demodulator performs demodulation, assuming that the mapped point is the point of an odd symbol and the amplitude is $1/\sqrt{2}$, so that the demodulation performance at the time of demodulation will deteriorate.

Thus, by inserting dummy data into transmission OFF timings, this problem is avoided. In Fig. 9, if the transmission is not turned OFF, transmission data is mapped on points 301, but it is mapped on the points 302 since the transmission is turned OFF. By inserting dummy data into the transmission OFF timings, and moving the data on the points 302 to the points 301, the above described problem can be avoided.

Further, since dummy data is not inserted if both of the pair of phase mapping signals are transmission OFF, the mapping is made on the origin in the signal space diagram of the QPSK modulated signal shown in Fig. 13, and transmission OFF is still indicated.

On the other hand, on the receiving side, demodulation is performed using data having dummy data inserted thereinto. After the demodulation, if data representing transmission OFF is inserted on a bit basis into the points indicating transmission OFF according to dummy data insertion position information, the same data sequence as that inputted at the transmitting side can be obtained, thereby enabling reduction of the demodulation performance deterioration.

As described above, in accordance with the fourth embodiment, since the signal mapped on the origin is determined to be a signal of transmission OFF and demodulated, the restored data becomes the same data as the transmission data inputted at the transmitting side, and the demodulation performance deterioration can be reduced.

Further, by mounting the dummy data generator 12 and the dummy data insertion position information generator 25 on base stations and terminals for use in a radio communication method, the demodulation performance deterioration by transmission OFF can be reduced.

(Fifth embodiment)

In 3GPP, a pair of two continuous symbols is submitted to serial-parallel conversion in the downstream line so as to be divided into signals of Ich and Qch. The signals of Ich and Qch divided in this way include DTX representing transmission OFF. Thus, by replacing the bit data of DTX representing transmission OFF by dummy data, the demodulation performance deterioration is reduced. In this case, for each transmission data, information indicating whether that data is the original data or dummy data is sent at the same time.

By this, at the demodulating side, after restoring the transmission data including dummy data, by replacing the portions having inserted dummy data by transmission OFF signals according to the dummy data position information, the demodulation performance deterioration can be reduced. That is, with respect to the signals of Ich and Qch which are made by parallel conversion of transmission data, not only the signals are transmitted, but, for the respective data sequences, data sequences including DTX information indicating transmission OFF are also transmitted at the same time.

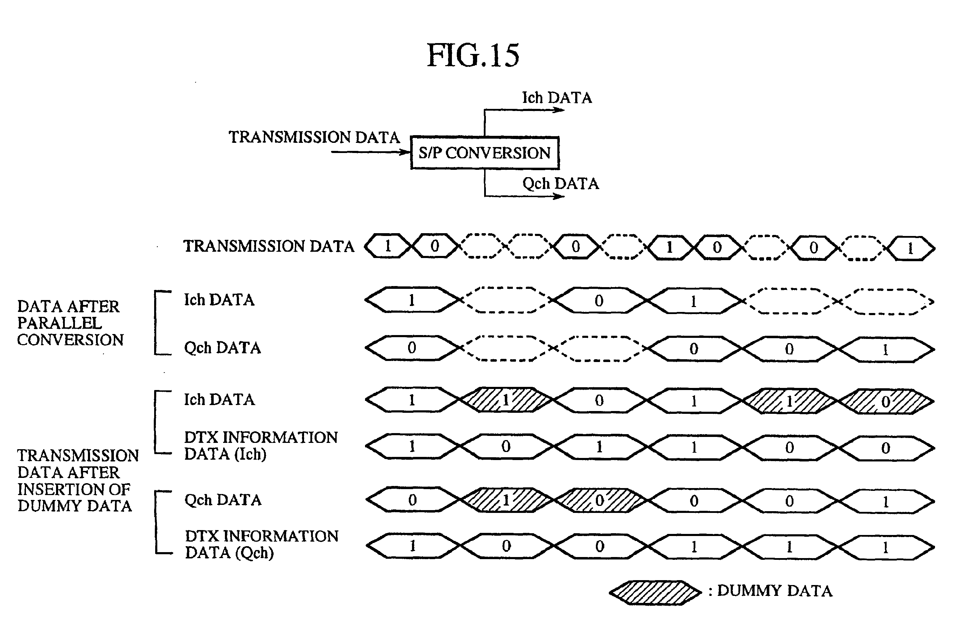

Now, description is made to the transmission data diagram including DTX information in Fig. 15. After the parallel conversion of transmission data including transmission OFF, data of Ich and Qch also include transmission OFF. For this, for each of Ich and Qch, dummy data is inserted in accordance with the timing of transmission OFF as described above. Then, for each of Ich and Qch, DTX information data is created by inserting 1 into real data portions and 0 into dummy data portions as dummy data insertion position information, and each DTX information data is transmitted simultaneously with the transmission of Ich and Qch data.

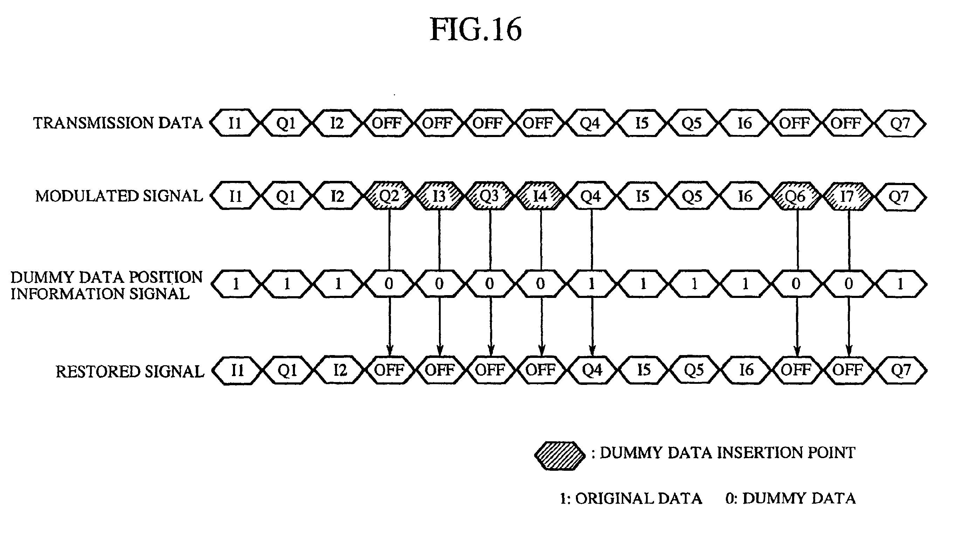

In phase mapping data sequences of Ich and Qch, all the portions indicating transmission OFF are replaced by dummy data, and dummy data insertion position information is simultaneously transmitted as shown in Fig. 16.

The receiving side receives the transmitted data and dummy data insertion position information, and performs demodulation on the transmitted data. Thereafter, the reconstructed data and the data indicating dummy data insertion position information are compared, and in the reconstructed data, by replacing the data in the dummy data insertion portions indicated by the dummy data insertion portion information by the transmission OFF information, the demodulation performance deterioration by transmission OFF can be reduced.

By placing the dummy data generator 25 before the processing for performing the level conversion of transmission data in the transmitting side, and replacing symbols representing transmission OFF by dummy data and performing a modulation, the above described processing is allowed. Further, at the receiving side, by inserting the dummy data insertion position information after the processing for performing the level conversion in the demodulation of the received data, transmission OFF symbols can be inserted into the received data, so the same data as that inputted to the transmitter is reconstructed.

As described above, according to the fifth embodiment, the demodulation performance deterioration can be reduced in demodulation at the receiving side. Further, by mounting the above described dummy data generator 12 and dummy data insertion position information generator 25 on base stations and terminals employing the CDMA method for use in a radio communication method, the demodulation performance deterioration by transmission OFF can be reduced.

(Sixth embodiment)

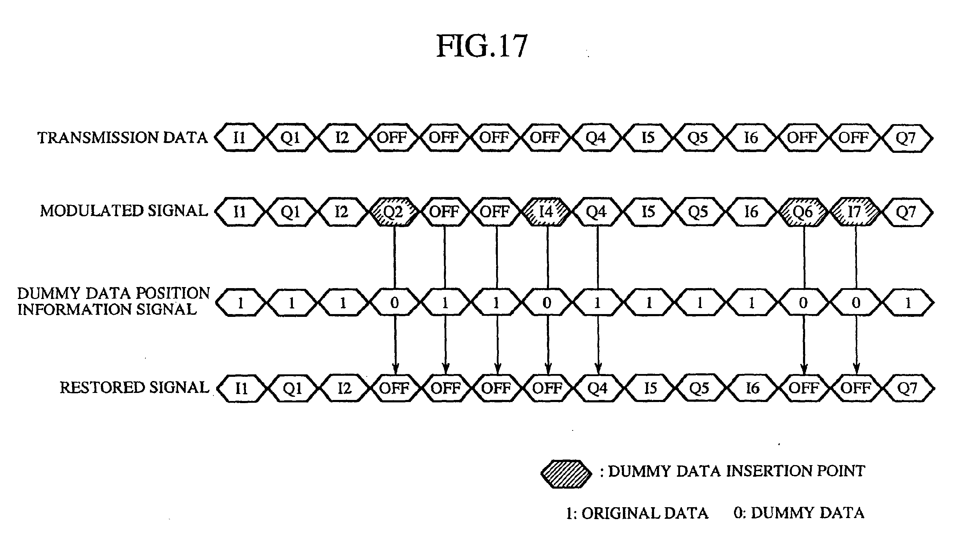

In the phase mapping data sequences of Ich and Qch, if a signal pair of Ich/Qch is taken up, and if one of the paring signals contains DTX data representing transmission OFF, as shown in Fig. 17, DTX is replaced by dummy data, and dummy data insertion position information is also sent at the same time. This allows the mapping as shown in Fig. 14 to be avoided.

The pairing signals are described as follows. When transmission data is submitted to a parallel conversion, data sequences of Ich and Qch are created. The signals of Ich and Qch to be transmitted in the same time band are called a pair of signals. When data of Ich and Qch are subsequently submitted to a serial conversion, the adjacent data are called a pair of signals. The paring signals in Fig. 17 are those having the same number following I and Q.

If both of the pairing signals are transmission OFF, they are not replaced by dummy data, but dummy data insertion position information is transmitted as transmission OFF information. With this, dummy data is inserted only into the necessary portions when they are demodulated as a pair of signals of Ich/Qch, so that the demodulation performance deterioration in demodulation can be reduced.

The receiving side receives the transmitted data and the data indicating dummy data insertion position information, and applies demodulation processing to the transmitted data. Thereafter, by comparing the restored data with the data indicating dummy data insertion position information, and with respect to the restored data, by replacing the data in the dummy data insertion portions indicated by the dummy data insertion position information by transmission OFF information, the demodulation performance deterioration by transmission OFF in demodulation can be reduced.

At the transmitting side, by placing the dummy data generator 12 before the processing for performing the level conversion of transmission data, and replacing symbols representing transmission OFF by dummy data and performing a modulation, the above described processing is enabled.

Further, at the receiving side, by placing the dummy data position information generator 25 after the processing for performing the level conversion for demodulation of the received data, transmission OFF symbols can be inserted in the received data, and the same data as that inputted to the transmitting side is restored.

As described above, in accordance with the sixth embodiment, the demodulation performance deterioration can be reduced in demodulation at the receiving side. Further, by mounting the dummy data generator 12 and the dummy data insertion position information generator 25 in base stations and terminals employing the CDMA method for use with a radio communication method, the demodulation performance deterioration by transmission OFF can be reduced.

Industrial Applicability

As described above, the digital modulation method in radio communication related to this invention is effective in reducing the demodulation performance deterioration at the receiving side.

**Claims**

1. A digital modulation method in radio communication, in which, if a digital signal to be transmitted requires transmission OFF on a bit basis, dummy data is inserted in accordance with the timing of transmission OFF.

2. The digital modulation method according to claim 1, wherein, if a pair of phase mapping signals of Ich and Qch converted based on an I/Q plane predetermined in the QPSK modulation method requires transmission OFF on a bit basis, dummy data is inserted into all the transmission OFF portions in accordance with the timing of transmission OFF.

3. The digital modulation method according to claim 1, wherein, if a pair of phase mapping signals of Ich and Qch converted based on an I/Q plane predetermined in the QPSK modulation method requires transmission OFF on a bit basis, and if the transmission OFF continues and only one of the pair of phase mapping signals is transmission OFF, dummy data is inserted into the transmission OFF portions in accordance with the timing of transmission OFF.

4. A radio communication method in which transmission data is modulated and transmitted by the digital modulation method according to claim 1.

5. A radio communication apparatus having a digital modulator employing the digital modulation method according to claim 1.

6. The radio communication apparatus according to claim 5 comprising a dummy data generator for inserting dummy data in accordance with the timing of transmission OFF of a digital signal to be transmitted; a level converter for performing level conversion of the transmission data having dummy data inserted thereinto; and a digital modulator having a multiplier for multiplying the output of the level converter by a carrier.

7. The radio communication apparatus according to claim 5, comprising a serial-parallel converter for converting a digital signal to be transmitted to two sequences; a dummy data generator for inserting dummy data in accordance with the timing of transmission OFF of said digital signal converted to the two sequences; a level converter for performing the level conversion of the transmission data having dummy data inserted thereinto; and a digital modulator having a multiplier for multiplying said transmission data of two sequences outputted from the level converter by carriers having phases different by 180 degrees.

8. A digital modulation method in radio communication **characterized in that**, when symbol data representing DTX (Discontinuous Transmission) is inserted into the down physical channel in the CDMA (Code Division Multiple Access) method, and if the phase mapping signals of Ich and Qch are symbol data representing DTX, dummy data is inserted into all the symbol data portions representing DTX.

9. A radio communication method in which transmission data is modulated and transmitted by the digital modulation method according to claim 8.

10. A radio communication apparatus having a digital modulator employing the digital modulation method according to claim 8.

11. A digital modulation method in radio communication **characterized in that**, when symbol data representing DTX (Discontinuous Transmission) is inserted into the down physical channel in the CDMA (Code Division Multiple Access) method, and if either one of the phase mapping symbols of Ich and Qch is symbol data representing DTX, dummy data is inserted into the symbol data portions representing DTX.

12. A radio communication method employing the digital modulation method according to claim 11.

13. A radio communication apparatus having a digital modulator employing the digital modulation method according to claim 11.

FIG.1A TRANSMISSION DATA

FIG.1B CARRIER

FIG.1C BPSK MODULATED WAVE

FIG.1D BANDWIDTH-LIMITED BPSK MODULATED WAVE

T: BIT PERIOD

FIG.2

TRANSMISSION DATA (0, 1) → LEVEL CONVERSION (1) →$a(t)$ ($\pm 1$)→ ⊗ (2) → BPF (3) → $s(t)$

$\cos \omega t$ CARRIER

# FIG.3

TRANSMISSION DATA → SERIAL-PARALLEL CONVERSION (4) → LEVEL CONVERSION (1)

Ich a(t) → ⊗ (5)

Qch b(t) → ⊗ (6)

π/2

⊕ (7) → BPF (3) → s(t) QPSK MODULATED SIGNAL a(t)cos ω t -b(t)sin ω t

CARRIER cos ω t

EP 1 267 534 A1

# FIG.4

TRANSMISSION DATA   1  2  3  4  5  6  7  8

a(t)   1   3   5   7

b(t)   2   4   6   8

# FIG.5

TRANSMISSION DATA (0, 1) → ⊕ 14 → LEVEL CONVERSION 11 — a(t) (±1) → ⊗ 15 → BPF 13 → s(t)

cosωt CARRIER → ⊗ 15

DUMMY DATA GENERATOR ~12 → ⊕ 14

# FIG.6

TRANSMISSION DATA  ⟨ 0 ⟩⟨OFF⟩⟨OFF⟩⟨ 0 ⟩⟨ 1 ⟩⟨ 1 ⟩⟨OFF⟩⟨OFF⟩⟨OFF⟩⟨OFF⟩⟨OFF⟩⟨ 1 ⟩⟨ 0 ⟩⟨ 1 ⟩⟨ 0 ⟩⟨ 0 ⟩

DATA SEQUENCE
AFTER INSERTION OF  ⟨ 0 ⟩⟨ 0 ⟩⟨ 0 ⟩⟨ 0 ⟩⟨ 1 ⟩⟨ 1 ⟩⟨ 1 ⟩⟨ 0 ⟩⟨ 1 ⟩⟨ 1 ⟩⟨ 0 ⟩⟨ 1 ⟩⟨ 0 ⟩⟨ 1 ⟩⟨ 0 ⟩⟨ 0 ⟩
DUMMY DATA

DATA SEQUENCE
AFTER LEVEL  ⟨ 1 ⟩⟨ 1 ⟩⟨ 1 ⟩⟨ 1 ⟩⟨ -1 ⟩⟨ -1 ⟩⟨ -1 ⟩⟨ 1 ⟩⟨ -1 ⟩⟨ -1 ⟩⟨ 1 ⟩⟨ -1 ⟩⟨ 1 ⟩⟨ -1 ⟩⟨ 1 ⟩⟨ 1 ⟩
CONVERSION

⬡ : DUMMY DATA INSERTION POINT

EP 1 267 534 A1

# FIG.7

BPSK MODULATED WAVE → ⊗ (21) → LPF (22) → DISCRIMINATOR (23) → (±1) → LEVEL CONVERSION (24) → ○ (0,1) 26 →

REFERENCE CARRIER $\cos\omega t$ → (21)

DUMMY DATA INFORMATION GENERATOR ~25 → ○ (26)

# FIG.8

| TRANSMISSION DATA | ⟨1⟩⟨0⟩⟨⋯⟩⟨0⟩⟨0⟩⟨⋯⟩⟨1⟩⟨0⟩ |
|---|---|
| DUMMY POSITION INFORMATION | ⟨1⟩⟨1⟩⟨0⟩⟨1⟩⟨1⟩⟨0⟩⟨1⟩⟨1⟩ |
| TRANSMISSION DATA AFTER INSERTION OF DUMMY DATA | ⟨1⟩⟨0⟩⟨1⟩⟨0⟩⟨0⟩⟨0⟩⟨1⟩⟨0⟩ |

INSERTED DUMMY DATA

EP 1 267 534 A1

# FIG.9

TRANSMISSION DATA: 0 OFF OFF 0 1 1 OFF OFF OFF OFF OFF 1 0 1 0 0 0

Ich SIGNAL: 0 OFF 1 OFF OFF OFF 0 0

Qch SIGNAL: OFF 0 1 OFF OFF 1 1 0

DATA SEQUENCE AFTER INSERTION OF DUMMY DATA: 0 1 1 1 1 0 0 0 / 1 0 1 0 0 1 1 0

: DUMMY DATA INSERTION POINT

EP 1 267 534 A1

# FIG.10

TRANSMISSION DATA: 0 OFF OFF 0 1 1 OFF OFF OFF OFF OFF 1 0 1 0 0 0

Ich SIGNAL: 0 OFF 1 OFF OFF OFF 0 0

Qch SIGNAL: OFF 0 1 OFF OFF 1 1 0

DATA SEQUENCE AFTER INSERTION OF DUMMY DATA: 0 1 1 OFF OFF 0 0 0 / 1 0 1 OFF OFF 1 1 0

▨ : DUMMY DATA INSERTION POINT

EP 1 267 534 A1

## FIG.11

TRANSMISSION DATA

18 SERIAL-PARALLEL CONVERSION

17a
17b

12 DUMMY DATA GENERATOR

11 LEVEL CONVERSION

Ich a(t)

Qch b(t)

18a
18b
π/2

19

13 BPF

CARRIER cosωt

QPSK MODULATED SIGNAL
a(t)cosωt
-b(t)sinωt

17

## FIG.12

QPSK MODULATED SIGNAL
a(t)cos ωt
-b(t)sin ωt

27a

27b

π/2

REFERENCE CARRIER
2cos ωt

28a LPF — Ich a(t)

28b LPF — Qch b(t)

23 DISCRIMINATOR

24 LEVEL CONVERSION

29a

29b

25 DUMMY DATA INFORMATION GENERATOR

30 PARALLEL-SERIAL CONVERSION

DEMODULATED DATA

# FIG.13

# FIG.14

# FIG.15

TRANSMISSION DATA → S/P CONVERSION → Ich DATA, Qch DATA

TRANSMISSION DATA: 1 0 ... ... 0 ... 1 0 ... 0 ... 1

DATA AFTER PARALLEL CONVERSION
- Ich DATA: 1 ... 0 1 ... ...
- Qch DATA: 0 ... ... 0 0 1

TRANSMISSION DATA AFTER INSERTION OF DUMMY DATA
- Ich DATA: 1 1 0 1 1 0
- DTX INFORMATION DATA (Ich): 1 0 1 1 0 0
- Qch DATA: 0 1 0 0 0 1
- DTX INFORMATION DATA (Qch): 1 0 0 1 1 1

▨ : DUMMY DATA

EP 1 267 534 A1

# FIG.16

TRANSMISSION DATA ⟨ I1 ✕ Q1 ✕ I2 ✕ OFF ✕ OFF ✕ OFF ✕ OFF ✕ Q4 ✕ I5 ✕ Q5 ✕ I6 ✕ OFF ✕ OFF ✕ Q7 ⟩

MODULATED SIGNAL ⟨ I1 ✕ Q1 ✕ I2 ✕ Q2 ✕ I3 ✕ Q3 ✕ I4 ✕ Q4 ✕ I5 ✕ Q5 ✕ I6 ✕ Q6 ✕ I7 ✕ Q7 ⟩

DUMMY DATA POSITION INFORMATION SIGNAL ⟨ 1 ✕ 1 ✕ 1 ✕ 0 ✕ 0 ✕ 0 ✕ 0 ✕ 1 ✕ 1 ✕ 1 ✕ 1 ✕ 0 ✕ 0 ✕ 1 ⟩

RESTORED SIGNAL ⟨ I1 ✕ Q1 ✕ I2 ✕ OFF ✕ OFF ✕ OFF ✕ OFF ✕ Q4 ✕ I5 ✕ Q5 ✕ I6 ✕ OFF ✕ OFF ✕ Q7 ⟩

▨ : DUMMY DATA INSERTION POINT

1: ORIGINAL DATA    0: DUMMY DATA

EP 1 267 534 A1

# FIG.17

TRANSMISSION DATA ⟨ I1 ⟩⟨ Q1 ⟩⟨ I2 ⟩⟨ OFF ⟩⟨ OFF ⟩⟨ OFF ⟩⟨ OFF ⟩⟨ Q4 ⟩⟨ I5 ⟩⟨ Q5 ⟩⟨ I6 ⟩⟨ OFF ⟩⟨ OFF ⟩⟨ Q7 ⟩

MODULATED SIGNAL ⟨ I1 ⟩⟨ Q1 ⟩⟨ I2 ⟩⟨ Q2 ⟩⟨ OFF ⟩⟨ OFF ⟩⟨ I4 ⟩⟨ Q4 ⟩⟨ I5 ⟩⟨ Q5 ⟩⟨ I6 ⟩⟨ Q6 ⟩⟨ I7 ⟩⟨ Q7 ⟩

DUMMY DATA POSITION INFORMATION SIGNAL ⟨ 1 ⟩⟨ 1 ⟩⟨ 1 ⟩⟨ 0 ⟩⟨ 1 ⟩⟨ 1 ⟩⟨ 0 ⟩⟨ 1 ⟩⟨ 1 ⟩⟨ 1 ⟩⟨ 1 ⟩⟨ 0 ⟩⟨ 0 ⟩⟨ 1 ⟩

RESTORED SIGNAL ⟨ I1 ⟩⟨ Q1 ⟩⟨ I2 ⟩⟨ OFF ⟩⟨ OFF ⟩⟨ OFF ⟩⟨ OFF ⟩⟨ Q4 ⟩⟨ I5 ⟩⟨ Q5 ⟩⟨ I6 ⟩⟨ OFF ⟩⟨ OFF ⟩⟨ Q7 ⟩

▨ : DUMMY DATA INSERTION POINT

1: ORIGINAL DATA    0: DUMMY DATA

EP 1 267 534 A1

**EP 1 267 534 A1**

## INTERNATIONAL SEARCH REPORT

International application No.

PCT/JP01/00955

**A. CLASSIFICATION OF SUBJECT MATTER**
Int.Cl$^7$  H04L 27/20, 27/22
Int.Cl$^7$  H04J  13/00

According to International Patent Classification (IPC) or to both national classification and IPC

**B. FIELDS SEARCHED**

Minimum documentation searched (classification system followed by classification symbols)
Int.Cl$^7$  H04L 27/20 - 27/22
Int.Cl$^7$  H04J  13/00

Documentation searched other than minimum documentation to the extent that such documents are included in the fields searched
Jitsuyo Shinan Koho        1926-2001    Toroku Jitsuyo Shinan Koho  1994-2001
Kokai Jitsuyo Shinan Koho  1971-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 62-176243, A (NEC Corporation), 03 August, 1987 (03.08.87), Figs. 1, 3; page 2, lower left column, lines 8 to 11 (Family: none) | 1,2,4,5,6,7 |
| Y | JP, 09-102759, A (Hitachi Denshi, Ltd.), 15 April, 1997 (15.04.97), Fig. 4; page 3, left column, lines 24 to 25 (Family: none) | 1,2,4,5,6,7 |
| Y | JP, 08-501665, A (Ericsson GE Mobile Communications), 20 February, 1996 (20.02.96), Fig. 1, & US, 5239557, A | 8,10 |
| A | JP, 10-513318, A (Nokia Mobile Phones Ltd.), 15 December, 1998 (15.12.98), Fig. 4, & GB, 2297669, A | 8-13 |
| A | JP, 11-74835, A (Nokia Mobile Phones Ltd.), 16 March, 1999 (16.03.99), | 8-13 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 April, 2001 (12.04.01) | 24 April, 2001 (24.04.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

23

# INTERNATIONAL SEARCH REPORT

International application No.

PCT/JP01/00955

C (Continuation). DOCUMENTS CONSIDERED TO BE RELEVANT

| Category* | Citation of document, with indication, where appropriate, of the relevant passages | Relevant to claim No. |
|---|---|---|
| | Figs. 4, 5,<br>& EP, 887948, A | |
| A | JP, 08-500475, A (Telefon Aktibolaget LM Ericsson),<br>16 January, 1996 (16.01.96),<br>Fig. 2B<br>& WO, 94/29981, A | 8-13 |
| A | JP, 09-261172, A (Matsushita Electric Ind. Co., Ltd.),<br>03 October, 1997 (03.10.97),<br>Fig. 3,<br>& WO, 99/16189, A | 1-13 |
| A | JP, 05-83208, A (Kokusai Electric Co., Ltd.),<br>02 April, 1993 (02.04.93),<br>Fig. 1,<br>& US, 5539858, A | 1-13 |
| A | JP, 2000-101476, A (Canon Inc.),<br>07 April, 2000 (07.04.00),<br>Fig. 1 (Family: none) | 1-13 |

Form PCT/ISA/210 (continuation of second sheet) (July 1992)